# DEMANDE DE BREVET EUROPEEN

(11) **EP 3 173 298 A1**
(43) Date de publication de la demande: **31.05.2017**
(21) Numéro de dépôt: 16199600.4
(22) Date de dépôt: 18.11.2016
(51) Int. Cl.: B60R 22/26, B60R 22/22

(54) **DISPOSITIF D ANCRAGE DE L EXTREMITE INFERIEURE D'UNE SANGLE DE CEINTURE DE SECURITE D'UN SIEGE OPTIONNEL SUR LE PLANCHER D'UN VEHICULE AUTOMOBILE**

(30) Priorité: 26.11.2015 FR 1561392
(71) Demandeur: Peugeot Citroën Automobiles SA, 78140 Vélizy-Villacoublay (FR)
(72) Inventeur: PINTO TEIXEIRA, Frederic, 91160 Ballainvilliers (FR); THOMAS, Karen, 91140 Villebon Sur Yvette (FR); RAMAHEFASOLO, Justine, 94800 Villejuif (FR)

(57) **Abrégé**

La présente invention concerne un dispositif d'ancrage de l'extrémité inférieure de la sangle de ceinture de sécurité d'un siège optionnel sur le plancher d'un véhicule automobile ; caractérisé en ce qu'il comporte un socle plastique (40) muni d'un perçage de passage (43) pour une vis afin de permettre sa fixation audit plancher, et en ce qu'il comporte en outre une équerre métallique (50) comprenant une branche d'attache (52) dotée de moyens de retenue de ladite extrémité inférieure de ladite sangle ainsi qu'une branche support (51) munie d'un trou (55) permettant la fixation de ladite équerre (50) sur ledit socle (40) et audit plancher par l'intermédiaire de ladite vis.

L'invention vise également un véhicule automobile comportant un plancher sur au moins un côté latéral duquel est fixé un tel dispositif d'ancrage.

## Description

### Domaine de l'invention

La présente invention concerne les dispositifs destinés à l'ancrage d'un élément d'une ceinture de sécurité sur la caisse d'un véhicule automobile. Elle vise en particulier les dispositifs d'ancrage de l'extrémité inférieure de la sangle de ceinture de sécurité d'un siège optionnel sur le plancher d'un tel véhicule automobile.

### Arrière-plan de l'invention

Certains types de véhicules automobiles, en particulier les grands monospaces, présentent un coffre arrière suffisamment volumineux pour la réception d'une troisième rangée optionnelle de deux sièges latéraux.

Bien que certaines versions de ces véhicules ne soient pas commercialisées d'office avec cette dernière rangée de sièges, il est nécessaire que ces derniers soient homologués pour pouvoir la recevoir ultérieurement.

Afin de répondre aux critères d'homologation, les ceintures de sécurité correspondant aux sièges de cette troisième rangée doivent impérativement être installées d'origine dans les véhicules, ce qui contraint les constructeurs à prévoir sur la caisse des dispositifs d'ancrage sur lesquels sont fixés les enrouleurs, les extrémités inférieures des sangles de ceintures ainsi que les renvois de ces sangles.

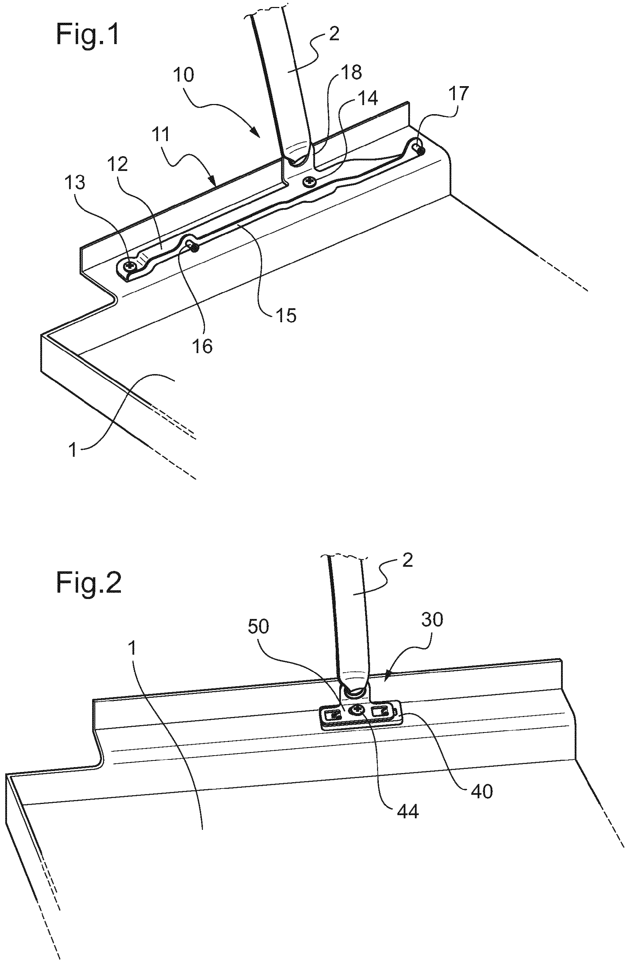

La figure 1 représente la partie arrière d'un plancher 1 de véhicule automobile sur un côté latéral duquel est fixé un dispositif d'ancrage 10 connu de l'extrémité inférieure de la sangle 2 d'une ceinture de sécurité d'un siège latéral optionnel de rang trois.

Ce dispositif 10 est constitué par un longeron 11 à section transversale en L, comportant une semelle 12 munie de deux perçages de passage (non visibles) pour des vis 13, 14 afin de permettre sa fixation sur le plancher 1 du véhicule, ainsi qu'un retour d'équerre 15 bordant latéralement cette semelle 12 et qui porte deux tourillons transversaux 16, 17 prévus pour coopérer avec deux crochets de verrouillage respectifs situés sur l'armature d'assise d'un siège latéral de rang trois (non représenté) afin de permettre son ancrage au plancher 1.

Le longeron 11 comprend également une patte d'attache 18 s'étendant sensiblement transversalement à la semelle 12 depuis son bord latéral opposé au retour d'équerre 15, et qui est munie d'une fenêtre de passage pour la boucle formant l'extrémité inférieure de la sangle 2 de la ceinture de sécurité.

Ce type de dispositif d'ancrage a pour avantage d'avoir une double fonctionnalité puisqu'il participe également au montage du siège correspondant de rang trois sur le plancher du véhicule.

Il présente cependant pour inconvénients d'avoir un coût de revient élevé et d'alourdir inutilement le véhicule lorsque ce dernier est commercialisé dans une version dépourvue de la troisième rangée de sièges.

### Objet et résumé de l'invention

La présente invention vise donc à proposer une solution économique et d'un impact limité sur la masse du véhicule pour assurer l'ancrage de l'extrémité inférieure d'une sangle de ceinture de sécurité d'un siège optionnel sur le plancher de véhicule.

Elle propose à cet effet un dispositif d'ancrage de l'extrémité inférieure de la sangle de ceinture de sécurité d'un siège optionnel sur le plancher d'un véhicule automobile ; caractérisé en ce qu'il comporte un socle plastique muni d'un perçage de passage pour une vis afin de permettre sa fixation audit plancher, et en ce qu'il comporte en outre une équerre métallique comprenant une branche d'attache dotée de moyens de retenue de ladite extrémité inférieure de ladite sangle ainsi qu'une branche support munie d'un trou permettant la fixation de ladite équerre sur ledit socle et audit plancher par l'intermédiaire de ladite vis.

Etant constitué d'une simple équerre métallique et d'un socle plastique, le dispositif d'ancrage selon l'invention est particulièrement économique à la fabrication et léger en comparaison des longerons métalliques actuellement employés pour assurer l'ancrage des extrémités inférieures des sangles de sécurité des sièges optionnels de troisième rang.

En outre, le fait que ce dispositif soit formé de deux pièces distinctes permet de faciliter l'installation ultérieure de la troisième rangée optionnelle de sièges (seul le socle plastique devant être remplacé par un longeron métallique doté de tourillons permettant l'arrimage de l'un des sièges latéraux de cette troisième rangée.

Selon des caractéristiques préférées du dispositif d'ancrage selon l'invention, prises seules ou en combinaison :
- ledit socle est venu de moulage d'une seule pièce à partir d'un polymère thermoplastique ;
- ledit polymère thermoplastique est chargé en fibres minérales ;
- ledit socle est creux, ce dernier comportant une paroi supérieure plane bordée sur l'ensemble de son périmètre par un rebord périphérique ;
- ledit socle comprend une pluralité de nervures de renfort s'étendant transversalement à intervalle régulier entre les deux portions longitudinales opposées dudit rebord périphérique ;
- ladite équerre est obtenue à partir d'une tôle métallique emboutie, découpée et mise en forme ;
- ladite branche support comporte des moyens de pré-maintien en position temporaire de ladite équerre contre ledit socle ;
- lesdits moyens de pré-maintien comportent deux languettes s'étendant depuis ladite branche support de l'équerre et aptes à coopérer avec deux ouvertures rectangulaires correspondantes ménagées dans ledit socle ; et/ou
- lesdits moyens de retenue de ladite extrémité inférieure de ladite sangle sont constitués par une fenêtre de passage pour une boucle formant l'extrémité inférieure de cette sangle.

L'invention vise également sous un deuxième aspect, un véhicule automobile comportant un plancher sur au moins un côté latéral duquel est fixé un tel dispositif d'ancrage.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 2 représente une partie latérale d'un plancher de véhicule automobile sur lequel est fixé un dispositif d'ancrage selon l'invention de l'extrémité inférieure de la sangle d'une ceinture de sécurité d'un siège optionnel de troisième rang ;
- la figure 3 est une vue éclatée en perspective du dispositif d'ancrage de la figure 2 ;
- la figure 4 représente une vue en perspective de dessus du dispositif d'ancrage de la figure 2 dans sa configuration pré-montée ; et
- la figure 5 est une vue en perspective de dessous du dispositif d'ancrage de la figure 2 dans sa configuration pré-montée.

### Description détaillée d'un mode préféré de réalisation

Le dispositif d'ancrage selon l'invention 30 est destiné à être monté en ligne d'assemblage sur chacun des deux côtés latéraux de la partie arrière du plancher 1 d'un véhicule automobile prévu pour être commercialisé dans une version dépourvue de troisième rangée de sièges mais devant être apte à l'accueillir ultérieurement.

Ce dispositif 30, représenté sur les figures 2 à 5, comporte un socle plastique creux 40 et une équerre métallique 50.

Le socle 40 est préférentiellement venu de moulage d'une seule pièce à partir d'un polymère thermoplastique tel que le polyamide (PA), éventuellement chargé en fibres minérales de sorte à renforcer sa tenue mécanique.

Il comporte une paroi supérieure plane 41 rectangulaire bordée sur l'ensemble de son périmètre par un rebord périphérique perpendiculaire 42 qui présente une hauteur constante.

Cette paroi plane 41 est munie dans sa partie centrale d'un perçage circulaire 43 de passage pour une vis 44 afin de permettre la fixation du socle 40 sur le plancher 1 du véhicule.

Le socle 40 comprend également une pluralité de nervures de renfort 45 s'étendant transversalement à intervalle régulier entre les deux portions longitudinales opposées du rebord périphérique 42.

L'équerre métallique 50 est avantageusement obtenue à partir d'une tôle emboutie, découpée et mise en forme.

Elle comporte une branche support plane 51 de forme rectangulaire et destinée à être fixée contre la paroi supérieure 41 du socle 40, ainsi qu'une branche d'attache 52 s'étendant perpendiculairement à la branche support 51 depuis la portion centrale de l'un de ses deux bords longitudinaux.

Cette branche d'attache 52 comporte des moyens de retenue de l'extrémité inférieure d'une sangle 2 de ceinture de sécurité, constitués en l'espèce par une fenêtre de passage circulaire 54 pour une boucle formant l'extrémité inférieure de cette sangle 2.

Légèrement plus courte que le socle 40 et de largeur sensiblement identique, la branche support 51 est dotée dans sa partie centrale d'un trou oblong 55 permettant la fixation de l'équerre 50 sur ce socle 40 et au plancher 1 du véhicule par l'intermédiaire de la vis 44 servant à fixer ledit socle 40 audit plancher 1.

Cette branche support 51 comporte également des moyens de pré-maintien en position temporaire de l'équerre 50 contre le socle 40 avant les opérations de vissage.

Ces moyens comportent deux languettes 56, s'étendant depuis la branche support 51 de part et d'autre du trou oblong 55, et aptes à coopérer avec deux ouvertures rectangulaires correspondantes 46 ménagées dans la paroi supérieure 41 du socle 40, de part et d'autre du perçage circulaire 43.

Les deux languettes 56 sont obtenues via des découpes réalisées respectivement dans les parties longitudinales avant et arrière de la branche support 51. Chacune d'elles ainsi formée est reliée à la branche support 51 par une ligne de pliage autour de laquelle elle est pivotée du côté opposé à la branche d'attache 52.

Les deux languettes 56 sont en outre cintrées de sorte que leurs extrémités libres s'étendent parallèlement à la branche support 51, selon une même direction longitudinale et dans le même sens.

On va maintenant décrire rapidement la manière dont s'effectue le montage en ligne d'assemblage du dispositif d'attache 30 selon l'invention sur un côté latéral de la partie arrière du plancher 1 du véhicule.

Après avoir saisi l'équerre 50 à laquelle l'extrémité inférieure de la sangle 2 de la ceinture de sécurité a été préalablement fixée, l'opérateur doit venir la disposer à l'aplomb du socle 40 de sorte que ses deux languettes 56 soient situées en regard des deux ouvertures rectangulaires 46, puis accoler ces deux pièces 40, 50 de sorte que la branche support 51 de l'équerre 50 repose contre la paroi supérieure 41 du socle 40 avec les extrémités libres des languettes 56 qui ont traversé les ouvertures 46.

L'opérateur doit ensuite faire coulisser longitudinalement l'équerre 50 sur le socle 40, de sorte que les extrémités libres des languettes 56 se glissent sous la paroi supérieure 41 de ce socle 40 et ce jusqu'à ce qu'au moins l'une de ces languettes 56 vienne en butée contre un bord longitudinal de l'une des ouvertures 46.

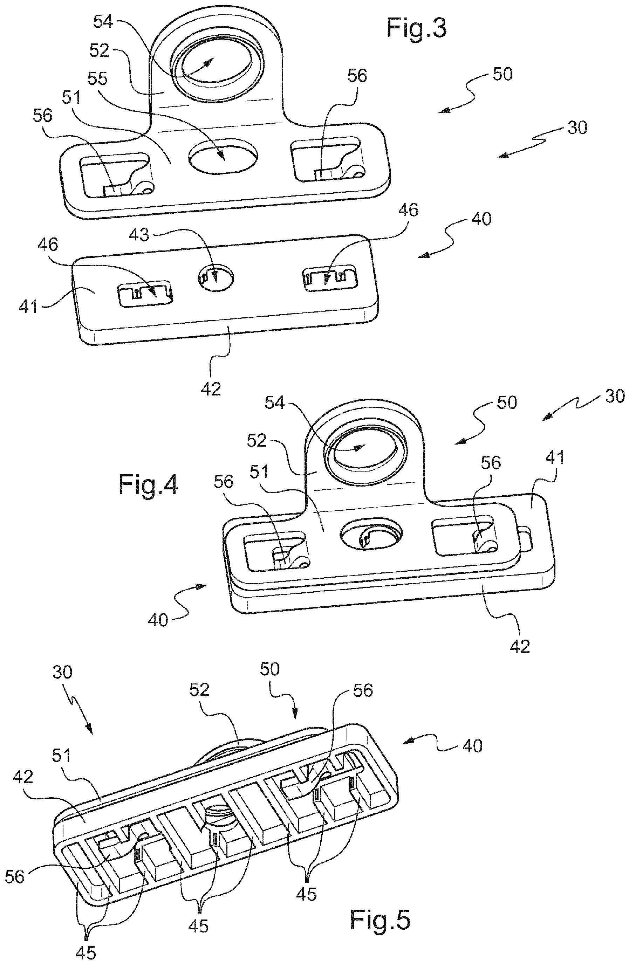

Le dispositif d'ancrage 30 occupe alors sa configuration pré-montée, illustrée par les figures 4 et 5, et dans laquelle le trou oblong 55 de la branche support 51 de l'équerre 50 se superpose au perçage circulaire 43 du socle 40.

Dans cette configuration, les extrémités libres des languettes 56 forment des épaulements venant en appui contre le pourtour inférieur des ouvertures rectangulaires 46 de sorte que la paroi supérieure 41 du socle 40 est prise en sandwich entre la branche support 51 de l'équerre 50 et ces épaulements.

L'équerre 50 est en outre empêchée de se mouvoir latéralement vis-à-vis du socle 40 ou en rotation autour de ce dernier du fait des tranches latérales des languettes 56 qui viennent buter contre les bords latéraux des deux ouvertures rectangulaires 46.

Le dispositif d'ancrage 30 peut alors être fixé sur le plancher 1 du véhicule. Pour ce faire, l'opérateur doit simplement introduire la tige filetée de la vis de fixation 44 au travers du trou oblong 55 de la branche support 51 de l'équerre 50 et du perçage circulaire 43 du socle 40, puis procéder à son vissage à l'aide d'une visseuse électrique dans un trou taraudé correspondant ménagé dans le plancher 1.

Les opérations de montage du dispositif d'ancrage 30 selon l'invention sont ainsi particulièrement simples et rapides.

En outre, ses dimensions réduites et le fait qu'il soit constitué partiellement en plastique le rendent particulièrement économique et léger en comparaison du dispositif connu de la figure 1.

Dans l'éventualité où le propriétaire du véhicule automobile souhaiterait faire installer la troisième rangée optionnelle de sièges, les deux dispositifs d'ancrage 30 selon l'invention seraient alors démontés du plancher 1 et les équerres métalliques 50 séparées des socles plastiques 40.

Ces deux équerres 50 devront alors être pré-montées sur deux longerons métalliques d'arrimage pour sièges de rang trois, semblables aux longerons connus, mais dotés des mêmes moyens complémentaires de pré-maintien que ceux des socles plastiques 40 et présentant en outre une hauteur identique à ces derniers afin de ne pas modifier l'implantation des points d'ancrages des extrémités inférieures des sangles des ceintures.

Les deux ensembles ainsi constitués ainsi que les brins boucles et les deux longerons centraux d'arrimage pour ces sièges de rang trois seront ensuite fixés au plancher du véhicule afin de permettre la mise en place de cette troisième rangée de sièges.

Selon des variantes de réalisation non représentés de l'invention, les moyens de pré-maintien de l'équerre sur le socle sont différents.

Selon d'autres variantes de réalisation non représentés, les moyens de retenue de l'extrémité inférieure de la sangle de la ceinture de sécurité sont également différents.

D'une manière générale, on rappelle que la présente invention ne se limite pas aux formes de réalisation décrites et représentées, mais qu'elle englobe toute variante d'exécution à la portée de l'homme du métier.

## Revendications

1. Dispositif d'ancrage de l'extrémité inférieure de la sangle (2) de ceinture de sécurité d'un siège optionnel sur le plancher (1) d'un véhicule automobile ; **caractérisé en ce qu'**il comporte un socle plastique (40) muni d'un perçage (43) de passage pour une vis (44) afin de permettre sa fixation audit plancher (1), et **en ce qu'**il comporte en outre une équerre métallique (50) comprenant une branche d'attache (52) dotée de moyens de retenue (54) de ladite extrémité inférieure de ladite sangle (2) ainsi qu'une branche support (51) munie d'un trou (55) permettant la fixation de ladite équerre (50) sur ledit socle (40) et audit plancher (1) par l'intermédiaire de ladite vis (44).

2. Dispositif d'ancrage selon la revendication 1, **caractérisé en ce que** ledit socle (40) est venu de moulage d'une seule pièce à partir d'un polymère thermoplastique.

3. Dispositif d'ancrage selon la revendication 2, **caractérisé en ce que** ledit polymère thermoplastique est chargé en fibres minérales.

4. Dispositif d'ancrage selon l'une des revendications 1 à 3, **caractérisé en ce que** ledit socle (40) est creux, ce dernier comportant une paroi supérieure plane (41) bordée sur l'ensemble de son périmètre par un rebord périphérique (42).

5. Dispositif d'ancrage selon la revendication 4, **caractérisé en ce que** ledit socle (40) comprend une pluralité de nervures de renfort (45) s'étendant transversalement à intervalle régulier entre les deux portions longitudinales opposées dudit rebord périphérique (42).

6. Dispositif d'ancrage selon l'une des revendications 1 à 5, **caractérisé en ce que** ladite équerre (50) est obtenue à partir d'une tôle métallique emboutie, découpée et mise en forme.

7. Dispositif d'ancrage selon l'une des revendications 1 à 6, **caractérisé en ce que** ladite branche support (51) comporte des moyens de pré-maintien en position temporaire (56) de ladite équerre (50) contre ledit socle (40).

8. Dispositif d'ancrage selon la revendication 7, **caractérisé en ce que** lesdits moyens de pré-maintien comportent deux languettes (56) s'étendant depuis ladite branche support (51) de l'équerre (50) et aptes à coopérer avec deux ouvertures rectangulaires correspondantes (46) ménagées dans ledit socle (40).

9. Dispositif d'ancrage selon l'une des revendications 1 à 8, **caractérisé en ce que** lesdits moyens de retenue de ladite extrémité inférieure de ladite sangle sont constitués par une fenêtre (54) de passage pour une boucle formant l'extrémité inférieure de cette sangle (2).

10. Véhicule automobile comportant un plancher (1) sur au moins un côté latéral duquel est fixé un dispositif d'ancrage selon l'une des revendications 1 à 9.
